# EUROPÄISCHE PATENTANMELDUNG

(11) **EP 3 599 393 A1**
(43) Veröffentlichungstag der Anmeldung: **29.01.2020**
(21) Anmeldenummer: 18184996.9
(22) Anmeldetag: 23.07.2018
(51) Int. Cl.: F16H 37/04, F16H 1/28, F16H 1/46, F03D 15/00

(54) **KOPPELGETRIEBE FÜR WINDKRAFTANLAGEN UND INDUSTRIE-APPLIKATIONEN**

(71) Anmelder: Flender GmbH, 46395 Bocholt (DE)
(72) Erfinder: Papies, Jennifer, 44797 Bochum (DE); Jorke, Silvia, 46117 Oberhausen (DE)
(74) Vertreter: Maier, Daniel Oliver

(57) **Zusammenfassung**

Die Erfindung betrifft ein Koppelgetriebe (10), das eine erste, zweite und dritte Planetenstufe (20, 30, 40) umfasst, die jeweils als Getriebekomponenten (11) ein Hohlrad (12), einen Planetenträger (14) und ein Sonnenrad (16) ausweisen. Dabei weisen die erste und zweite Planetenstufe (20, 30) jeweils eine stationäre Getriebekomponente (11) auf. Erfindungsgemäß weist das Koppelgetriebe (10) eine durchmesserspezifische Leistungsdichte (50) von mindestens 2,9 kW/mm auf. Die Erfindung betrifft auch einen Antriebsstrang (60) für eine Windkraftanlage (70). Der Antriebsstrang (60) umfasst eine Rotorwelle (62), die drehmomentübertragend mit einem Getriebe (66) gekoppelt ist, und einen Generator (64), der drehmomentübertragend mit dem Getriebe (66) gekoppelt ist. Erfindungsgemäß ist das Getriebe (66) als ein entsprechendes Koppelgetriebe (10) ausgebildet. Ferner betrifft die Erfindung eine entsprechend ausgestattete Windkraftanlage (70). Ebenso betrifft die Erfindung eine Industrie-Applikation (80), umfassend Getriebe (66), das als ein entsprechendes Koppelgetriebe (10) ausgebildet ist.

## Beschreibung

Die Erfindung betrifft ein Koppelgetriebe, das für Windkraftanlagen und Industrie-Applikationen geeignet ist. Die Erfindung betrifft auch einen Antriebsstrang für eine Windkraftanlage, der über ein entsprechendes Koppelgetriebe verfügt. Ebenso betrifft die Erfindung eine korrespondierende Windkraftanlage. Ferner betrifft die Erfindung eine Industrie-Applikation, die mit einem erfindungsgemäßen Koppelgetriebe ausgestattet ist.

Das Dokument WO 2013/004345 A1 offenbart ein Getriebe für eine Windkraftanlage, das drei miteinander verbundene Planetenstufen aufweist und ein Übersetzungsverhältnis von 20 bis 50 bietet. In einer rotorseitigen Planetenstufe ist dabei das Hohlrad mit dem Gehäuse verbunden. Ein Planetensteg einer der mittleren Planetenstufe ist auch mit dem Gehäuse verbunden. Die generatorseitige Planetenstufe wiederum weist ein drehbares Hohlrad auf, das mit einem Sonnenrad der zweiten Planetenstufe gekoppelt ist.

DE 10 2013 2015 878 B3 zeigt eine hochübersetzendes Umlaufrädergetriebe, das drei miteinander verbundene Planetenstufen aufweist. Dabei wird an die erste Planetenstufe eine Antriebsleistung geführt und an der dritten Planetenstufe abgeführt. Die zweite und dritte Planetenstufe weisen jeweils eine stationäre Komponente auf. Ein Sonnenrad der zweiten Planetenstufe ist dabei mit einem Planetenträger der ersten Planetenstufe gekoppelt.

Aus DE 199 63 597 A1 ist ein Getriebe für Windkraftanlagen bekannt, das über insgesamt drei Planetenstufen verfügt. Eine in eine erste Stufe eingeleitete Antriebsleistung wird verzweigt in eine zweite und dritte Stufe ausgeleitet. Dazu ist in der ersten Stufe das Hohlrad stationär ausgebildet und in der zweiten Stufe der Planetenträger.

Die Druckschrift DE 10 2013 216 802 A1 offenbart ein dreistufiges Getriebe, bei dem ein Antriebsdrehmoment über eine Sonnenwelle in eine erste Planetenstufe eingeleitet wird und über deren Planetenträger und deren Hohlrad an die zweite und dritte Planetenstufe weitergeleitet wird. Die so aufgeteilte Antriebsleistung wird über ein Hohlrad der dritten Planetenstufe an eine Abtriebswelle weitergeführt. Dabei ist der Planetenträger der zweiten Planetenstufe stationär ausgebildet.

DE 10 2012 217 509 A1 offenbart ein dreistufiges Getriebe, in dem ein Planetenträger einer ersten Planetenstufe und ein Hohlrad einer zweiten Planetenstufe mit einer Antriebswelle verbunden sind. Das Hohlrad der ersten Planetenstufe ist drehfest mit der Sonnenwelle der zweiten Planetenstufe gekoppelt, die wiederum mit einem Hohlrad der dritten Planetenstufe verbunden ist. Des Weiteren ist die Sonnenwelle der ersten Planetenstufe mit einem Planetenträger der der dritten Planetenstufe verbunden.

In einer Vielzahl an Teilgebieten des Anlagenbaus und in der Energieerzeugung besteht die Zielsetzung, höhere Antriebsleistungen einzusetzen, um dadurch größere und leistungsfähigere Anlagen bzw. Kraftwerke zu verwirklichen. Daraus ergibt sich ein Bedarf an Getrieben, die bei erhöhter Eingangsleistung ein erhöhtes Übersetzungs- bzw. Untersetzungverhältnis bieten. Gleichzeitig wird eine kompakte und kosteneffiziente Bauweise gewünscht. Beispielsweise wird bei Windkraftanlagen angestrebt, bei gleichbleibender Gondelgröße höhere Antriebsleistungen in ein Getriebe einzuleiten. Ebenso wird ein hohes Maß an Zuverlässigkeit und Lebensdauer für das Getriebe angestrebt. Der Erfindung liegt die Aufgabe zugrunde, ein Getriebe bereitzustellen, das in zumindest einem dieser Punkte eine Verbesserung bietet.

Die Aufgabenstellung wird durch das erfindungsgemäße Koppelgetriebe gelöst. Das Koppelgetriebe umfasst eine erste, eine zweite und eine dritte Planetenstufe, die miteinander gekoppelt sind. Jede der Planetenstufen weist eine Mehrzahl an Getriebekomponenten auf, die ineinandergreifen. Zu den Getriebekomponenten gehören in jeder der Planetenstufen ein Hohlrad, ein Sonnenrad und ein Planetenträger, in dem drehbar zumindest ein Planetenrad aufgenommen ist. Das Hohlrad, der Planetenträger und das Sonnenrad sind in den Planetenstufen konzentrisch zu einer Hauptdrehachse des Koppelgetriebes angeordnet. Die erste Planetenstufe weist eine Getriebekomponente auf, die als stationäre Getriebekomponente ausgebildet ist, also bezüglich der Hauptdrehachse starr ist. Ferner weist auch die zweite Planetenstufe eine Getriebekomponente auf, die als stationäre Getriebekomponente ausgebildet ist. Erfindungsgemäß weist das Koppelgetriebe eine durchmesserspezifische Leistungsdichte von mindestens 2,9 kN/mm auf. Die durchmesserspezifische Leistungsdichte bezieht sich in puncto Leistung dabei auf die Nennleistung des Koppelgetriebes, die bestimmungsgemäß zuführbar ist. Diese wird auf den Außendurchmesser des Koppelgetriebes am Hohlrad mit dem höchsten Durchmesser bezogen. Zusätzliche radiale Überstände wie Drehmomentstützen bleiben hierbei unberücksichtigt.

Bei der Konstruktion von Koppelgetrieben existiert eine Vielzahl an Konstruktionsparametern, die zu einer Vorauslegung oder einer Konzeptauswahl für ein Koppelgetriebe zugrundelegbar sind. Dazu gehört die Anzahl an Planetenstufen, deren jeweilige Standübersetzung, und welche Getriebekomponente welcher Planetenstufe mit welcher Getriebekomponente welcher Getriebekomponente einer benachbarten Planetenstufe zu koppeln sei, oder welche Getriebekomponente stationär auszubilden sei. Ferner ist auswählbar, ob eine Planetenstufe als Minusgetriebe oder als Plusgetriebe auszubilden ist. Jegliche Auswahl aus den genannten Konstruktionsparametern führt zu weitergehenden Auslegungsaufgaben, wie beispielsweise die Auswahl der Anzahl an Planetenrädern in den einzelnen Planetenstufen. Dementsprechend besteht eine im Wesentlichen unüberschaubare Anzahl an möglichen Vorauslegungen von Koppelgetrieben, also Sätzen von Konstruktionsparametern. Der Erfindung liegt unter anderem die überraschende Erkenntnis zugrunde, dass Koppelgetriebe mit drei Planetenstufen, bei denen die erste und zweite Planetenstufe je eine stationäre Getriebekomponente aufweisen, eine besonders leistungsfähiges und gleichzeitig kompaktes Koppelgetriebe erlaubt. Dazu gehört auch eine entsprechend hohe Gesamtübersetzung, die zwischen einer ersten Leistungswelle und einer zweiten Leistungswelle des Koppelgetriebes vorliegt. Dabei ist die erste Leistungswelle mit der ersten Planetenstufe gekoppelt und die dritte Planetenstufe mit der zweiten Leistungswelle. Von der ersten zur zweiten Leistungswelle erfolgt dabei eine Erhöhung der daran vorliegenden Drehzahl. Durch die vorliegende Erfindung wird damit ein Koppelgetriebe bereitgestellt, das dazu geeignet ist, einer hohen Antriebsleistung mit hohem Drehmoment eine ausreichend hohe Gesamtübersetzung bereitzustellen, die beispielsweise den Betrieb einer Windkraftanlage erlaubt. Analog ist das beanspruchte Koppelgetriebe auch dazu geeignet, beim Betrieb einer mechanischen Anwendung in einer Industrie-Applikation von der zweiten auf die erste Leistungswelle eine Erhöhung der daran vorliegenden Drehzahl bereitzustellen. Aufgrund der erfindungsgemäß erzielten erhöhten durchmesserspezifischen Leistungsdichte von mindestens 2,9 kW/mm sind die beanspruchten Koppelgetriebe besonders kompakt herstellbar, was wiederum einen einfacheren Transport und eine schnellere, und damit kosteneffizientere Montage erlaubt.

In einer Ausführungsform des beanspruchten Koppelgetriebes ist das Sonnenrad der ersten Planetenstufe drehstarr mit dem Hohlrad der dritten Planetenstufe verbunden. Zusätzlich oder alternativ kann das Sonnenrad der zweiten Planetenstufe drehstarr mit dem Planetenträger der dritten Planetenstufe verbunden sein. Unter drehstarr ist dabei zu verstehen, dass eine Drehung einer Getriebekomponente unmittelbar, also frei von Beeinflussungen des vorliegenden Drehmoments oder der vorliegenden Drehzahl, auf die andere Getriebekomponente übertragen wird. Durch eine entsprechende Kopplung des Planetenträgers und des Hohlrads der dritten Planetenstufe mit der ersten und zweiten Planetenstufe wird eine vorteilhafte Kopplung dieser Getriebekomponenten erzielt. Demzufolge kann die dritte Planetenstufe betragsmäßig eine Standübersetzung von 3 bis 7, vorzugsweise von 3 bis 5 bereitstellen. Standübersetzungen im Sinne der vorliegenden Anmeldung werden lediglich betragsmäßig angegeben. Die dazu erforderlichen Größenverhältnisse der Getriebekomponenten erlauben eine kompakte und gleichzeitig hoch belastbare Konstruktion der dritten Planetenstufe. Darüber hinaus sind die oben dargestellten Vorteile des beanspruchten Koppelgetriebes bei einer breiten Spanne von Standübersetzungen der dritten Planetenstufe erzielbar. Die beanspruchte Lösung ist damit robust in der Auslegung.

Des Weiteren kann das beanspruchte Koppelgetriebe eine durchmesserspezifische Leistungsdichte von mindestens 3,5 kW/mm aufweisen, bevorzugt von mindestens 4,0 kW/mm. Weiter bevorzugt kann das Koppelgetriebe auch eine durchmesserspezifische Leistungsdichte von mindestens 4,5 kW/mm aufweisen. Das beanspruchte Koppelgetriebe bietet damit eine überraschend hohe Leistungsfähigkeit bei geringer Baugröße. Das Koppelgetriebe basiert unter anderem auf der überraschenden Erkenntnis, dass bei der Vielzahl an vorhandenen Konstruktionsparametern bei einer Vorauslegung eines Koppelgetriebes, die skizzierten Ausführungsformen nichterfindungsgemäße Ausführungsformen in puncto Leistungsfähigkeit und Kompaktheit überragen.

Darüber hinaus kann das Hohlrad der ersten Planetenstufe und/oder der Planetenträger der zweiten Planetenstufe als stationäre Getriebekomponente ausgebildet sein. Mittels eines stationären Hohlrads in der ersten Planetenstufe wird eine vorteilhafte Aufteilung der über die erste Leistungswelle zugeführten Antriebsleistung auf den Planetenträger und das Sonnenrad der ersten Planetenstufe ermöglicht. Die Aufteilung der zugeführten Antriebsleistung erfolgt in Teilleistungen. Durch das stationäre Hohlrad in der ersten Planetenstufe sind darin mit dem drehbaren Planetenträger und dem drehbaren Sonnenrad vorteilhafte Größenverhältnisse für die Teilleistungen erzielbar. Durch ihren stationären Planetenträger in der zweiten Planetenstufe wiederum zwischen deren Hohlrad und deren Sonnenrad eine vorteilhafte Änderung der Drehzahl der darin eingeleiteten Teilleistung erzielbar. Einzeln oder in Kombination dieser Merkmale sind der dritten Planetenstufe Teilleistungen zuführbar, die jeweils eine Drehzahl und ein korrespondierendes Drehmoment aufweisen, die von der dritten Planetenstufe zu einer Abtriebsleistung kombinierbar sind. Basierend auf den Drehzahlen, und entsprechend den Drehmomenten der Teilleistungen, die der dritten Planetenstufe zuführbar sind, ist bei der Abtriebsleistung eine angestrebte Drehzahl bei entsprechendem Drehmoment, mit einer entsprechend kompakten dritten Planetenstufe erzielbar. Damit erlaubt eine entsprechende Auswahl, welche Getriebekomponenten in der ersten und/oder zweiten Planetenstufe als stationäre Getriebekomponenten auszubilden sind, zu einer vorteilhaften, insbesondere kompakten, Konstruktion der dritten Planetenstufe.

In einer weiteren Ausführungsform des beanspruchten Koppelgetriebes kann die dritte Planetenstufe, entlang der Hauptdrehachse des Koppelgetriebes betrachtet, zwischen der ersten und der zweiten Planetenstufe angeordnet sein. Dadurch wird die konstruktive Umsetzung einer drehstarren Verbindung zwischen dem Sonnenrad der ersten Planetenstufe und dem Hohlrad der dritten Planetenstufe vereinfacht. Insbesondere ist eine entsprechende Verbindungskomponente entlang der Hauptdrehachse betrachtet erheblich verkürzt. Infolgedessen sind die rotierenden Massen in einem entsprechenden Koppelgetriebe reduziert, was wiederum zu einer Geräuschminderung im Betrieb führt. Darüber hinaus wird dadurch, dass die dritte Planetenstufe zwischen der ersten und zweiten Planetenstufe angeordnet ist, die Montage des Koppelgetriebes vereinfacht. Ebenso wird durch einen entsprechend vereinfachten Aufbau des Koppelgetriebes eine Schmierung, insbesondere von Gleitlagern, die beispielsweise zur Lagerung von Planetenrädern oder eines Planetenträgers einsetzbar sind, vereinfacht. Insbesondere ermöglicht eine derartig vereinfachte Schmierung eine wirksamere Wärmeabfuhr, was in einer verbesserten Wärmebilanz des Koppelgetriebes resultiert. Gleichermaßen wird so eine drehstarre Verbindung zwischen dem Sonnenrad der zweiten Planetenstufe und dem Planetenträger der dritten Planetenstufe vereinfacht. Insbesondere ist eine entsprechende Verbindungskomponente entlang der Hauptdrehachse gesehen verkürzt. Vor allem im Zusammenspiel mit der Verbindung zwischen dem Sonnenrad der ersten Planetenstufe und dem Hohlrad der dritten Planetenstufe wird so eine konstruktive Vereinfachung erzielt. Ist es entbehrlich, dass diese Verbindungskomponenten sich im Bereich der zweiten und/oder dritten Planetenstufe parallel ausgerichtet sind und sich gegenseitig umhüllen. Durch ein Platzieren der dritten Planetenstufe zwischen der ersten und zweiten Planetenstufe wird insgesamt eine weitere Vereinfachung bei der Herstellung des beanspruchten Koppelgetriebes erreicht. Die Wirkung einer gesteigerten durchmesserspezifischen Leistungsdichte wird so weiter gesteigert.

Ferner kann im beanspruchten Koppelgetriebe die erste, zweite oder dritte Planetenstufe als Plusgetriebe ausgebildet sein. Vorzugsweise ist die dritte Planetenstufe als Plusgetriebe ausgebildet. Bei einem Plusgetriebe ist gegenüber einem Minusgetriebe bei vorgegebener Drehrichtung der Eingangswelle die Drehrichtung der Ausgangswelle umgekehrt. Dies ist beispielsweise dadurch erzielbar, dass zwischen einem Hohlrad und einem Sonnenrad zwei ineinandergreifende Planetenräder angeordnet sind. Eine als Plusgetriebe ausgebildete erste, zweite oder dritte Planetenstufe erlaubt es, eine angestrebte Gesamtübersetzung des Koppelgetriebes weiter zu steigern. Gleichzeitig sind Plusgetriebe ebenfalls kompakt herstellbar.

Darüber hinaus können der Planetenträger der der ersten Planetenstufe und/oder das Hohlrad der zweiten Planetenstufe zum Einleiten jeweils einer Teilleistung der Antriebsleistung ausgebildet sein. Dazu kann beispielsweise der Planetenträger der ersten Planetenstufe drehstarr mit dem Hohlrad der zweiten Planetenstufe gekoppelt sein, und so die Antriebsleistung aufgeteilt werden. Eine erste Teilleistung, die dem Planetenträger der ersten Planetenstufe zuführbar ist, ist über das Sonnenrad der ersten Planetenstufe in die dritte Planetenstufe einleitbar. Eine zweite Teilleistung, die dem Hohlrad der zweiten Planetenstufe zuführbar ist, ist über das Sonnenrad der zweiten Planetenstufe in die dritte Planetenstufe einleitbar. Durch die Auswahl der drehstarr miteinander gekoppelten Getriebekomponenten sind für die erste und zweite Teilleistung vorteilhafte Größenverhältnisse erzielbar. Ferner kann die Aufteilung der Antriebsleistung derart erfolgen, dass die zweite Teilleistung, die dem Hohlrad der zweiten Planetenstufe zugeführt wird, zwischen 30% und 50% der Antriebsleistung entspricht. Vorzugsweise beträgt die zweite Teilleistung 50% der Antriebsleitung. Die erste Teilleistung ergibt sich entsprechend, so dass beide Teilleistungen zusammen der Antriebsleistung entsprechen. Bei entsprechender Aufteilung der Antriebsleistung ergeben sich besonders kompakte Planetenstufen.

In einer weiteren Ausführungsform des beanspruchten Koppelgetriebes weist die erste Planetenstufe betragsmäßig eine Standübersetzung von 1,8 bis 7,5 auf. Alternativ oder ergänzend dazu weist die zweite Planetenstufe eine Standübersetzung von 1,8 bis 7,5 auf. Die Standübersetzungen der ersten und zweiten Planetenstufe weisen untereinander ein Größenverhältnis von im Wesentlichen 1:2 bis 2:1 auf. Damit übersteigt bei der ersten und zweiten Planetenstufe die die größere Standübersetzung die kleinere Standübersetzung vorzugsweise um einen Faktor von maximal Zwei.. Derartige Standübersetzungen in der ersten und zweiten Planetenstufe erlauben es, im Zusammenwirken mit der dritten Planetenstufe eine erhöhte Gesamtübersetzung des Koppelgetriebes bereitzustellen. Ferner erlauben solche Standübersetzungen die Möglichkeit, die Getriebekomponenten in der ersten und zweiten Stufe derart zu dimensionieren, dass bei diesen eine erhöhte Materialausnutzung erzielbar ist, wodurch die erste und zweite Planetenstufe besonders kompakt herstellbar sind. Bevorzugt sind die Standübersetzungen der ersten und zweiten Planetenstufe im Wesentlichen gleich groß. Dies erlaubt es, die erste und zweite Planetenstufe in den gleichen relativen Größen herzustellen und in besonders einfacher Weise in diesen zwei Planetenstufen eine vorteilhafte Verteilung der Teilleistungen zu erzielen. Ferner erlaubt die Ähnlichkeit entsprechender Planetenstufen es auch, in beiden Planetenstufen gleiche Getriebekomponenten zu verwenden, beispielsweise gleiche Planetenräder. Eine entsprechende Gleichteileverwendung ermöglicht es, Getriebekomponenten in erhöhter Stückzahl, und damit kosteneffizienter, herzustellen.

Des Weiteren kann das beanspruchte Koppelgetriebe einen Außendurchmesser aufweisen, der geringer ist als ein lichtes Innenmaß eines ISO-Standard-Containers. Ein lichtes Innenmaß ist beispielsweise die Breite oder die Höhe des Container-Innenraums. ISO-Standard-Container sind beispielsweise in der Norm ISO 668 näher beschrieben. Ein sogenannter 40-Fuß-Container, der ein verbreiteter ISO-Standard-Container ist, weist beispielsweise im Innenraum eine Breite von 2352 mm und eine Höhe von 2698 mm auf. Das beanspruchte Koppelgetriebe weist einen Außendurchmesser, also einen größten Durchmesser auf, der ein Verstauen des Koppelgetriebes in einem solchen ISO-Standard-Container erlaubt. Der Erfindung liegt unter anderem die Erkenntnis zugrunde, dass ein besonders günstiges Verhältnis aus mechanischer Beanspruchbarkeit und Kompaktheit bei Koppelgetrieben mit einem Außendurchmesser von ca. 2000 mm bis 3000 mm, bevorzugt von 2300 mm bis 2400 mm, erzielt wird. Das beanspruchte Koppelgetriebe ist somit als Ganzes in einfacher Weise transportierbar, was wiederum den Aufbau einer Windkraftanlage oder einer Industrie-Applikation beschleunigt und kosteneffizienter gestaltet.

Die zugrundeliegende Aufgabenstellung wird auch durch einen erfindungsgemäßen Antriebsstrang gelöst. Der Antriebsstrang ist zum Einsatz in einer Windkraftanlage ausgebildet und umfasst eine Rotorwelle, die drehmomentübertragend mit einem Rotor der Windkraftanlage koppelbar ist. Zum Einsatz in der Windkraftanlage ist der Antriebsstrang in eine Gondel der Windkraftanlage montierbar. Die Rotorwelle ist auch mit einem Getriebe drehmomentübertragend gekoppelt, so dass die Drehung des Rotors in das Getriebe übertragbar ist. Zum Antriebsstrang gehört auch ein Generator, der drehmomentübertragend mit dem Getriebe gekoppelt ist, so dass die Drehung des Rotors unter Erhöhung der Drehzahl in den Generator übertragen wird. Erfindungsgemäß ist das Getriebe als ein Koppelgetriebe gemäß einer der oben dargestellten Ausführungsformen ausgebildet. Das als Getriebe eingesetzte Koppelgetriebe ist kompakter als ein serielles Getriebe, das für die gleiche Nennleistung ausgelegt ist. Dementsprechend ist bei gleichbleibendem Außendurchmesser des Getriebes eine erhöhte Antriebsleistung in den Generator einleitbar. Infolgedessen ist der erfindungsgemäße Antriebsstrang beispielsweise im Rahmen einer Nachrüstung der Windkraftanlage herstellbar, wobei eine neue Gondel entbehrlich ist. Somit ist es möglich, mit dem erfindungsgemäßen Antriebsstrang bestehende Windkraftanlagen bei reduziertem Bauaufwand aufzurüsten.

Die skizzierte Aufgabenstellung wird gleichermaßen durch die erfindungsgemäße Windkraftanlage gelöst. Die Windkraftanlage weist eine Gondel auf, an der drehbar ein Rotor angebracht ist. Der Rotor ist drehmomentübertragend mit einer Rotorwelle verbunden, die zu einem Antriebsstrang gehört, der in der Gondel angeordnet ist. Erfindungsgemäß ist der Antriebsstrang gemäß einer der oben beschriebenen Ausführungsformen ausgebildet. Eine derartige Windkraftanlage bietet ein hohes Maß an Leistungsfähigkeit bei geringem Platzbedarf und ist kosteneffizient herstellbar.

Gleichermaßen wird die beschriebene Aufgabenstellung auch durch eine erfindungsgemäße Industrie-Applikation gelöst. Die Industrie-Applikation umfasst ein Antriebsmittel, das beispielsweise als Elektromotor, als Verbrennungsmotor, oder als Hydraulikmotor ausgebildet ist. Das Antriebsmittel ist drehmomentübertragend mit einem Getriebe gekoppelt, über das einer mechanischen Anwendung die notwendige Antriebsleistung zur Verfügung gestellt wird. Dazu ist das Getriebe drehmomentübertragend mit der mechanischen Anwendung verbunden. Die mechanische Anwendung kann beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder als Schrottpresse ausgebildet sein.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleiche technische Bedeutung haben. Es zeigen im Einzelnen:
- FIG 1: eine schematische Darstellung einer ersten Ausführungsform des beanspruchten Koppelgetriebes;
- FIG 2: eine schematische Darstellung einer zweiten Ausführungsform des beanspruchten Koppelgetriebes;
- FIG 3: eine geschnittene Schrägansicht einer beanspruchten Windkraftanlage mit einem beanspruchten Antriebsstrang;
- FIG 4: eine schematische Darstellung einer beanspruchten Industrie-Applikation.

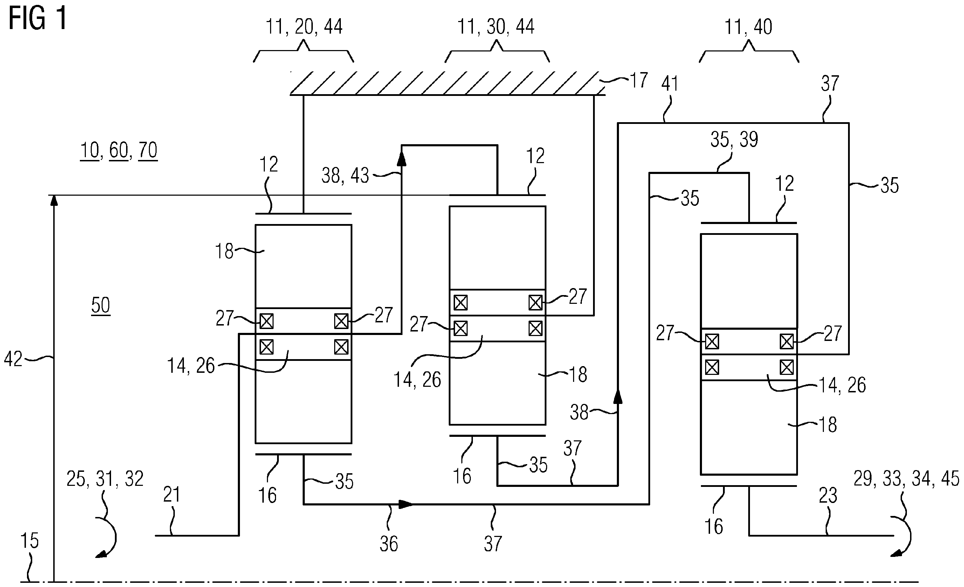

FIG 1 zeigt schematisch den Aufbau einer ersten Ausführungsform des beanspruchten Koppelgetriebes 10. Das Koppelgetriebe 10 gemäß FIG 1 ist zur Verwendung in einem nicht näher dargestellten Antriebsstrang 60 einer auch nicht näher dargestellten Windkraftanlage 70 eingerichtet. Das Koppelgetriebe 10 umfasst eine erste, eine zweite und eine dritte Planetenstufe 20, 30, 40, die jeweils eine Mehrzahl an Getriebekomponenten 11 aufweisen und zusammenwirken. Die erste Planetenstufe 20 umfasst ein Hohlrad 12, ein Sonnenrad 16 und einen Planetenträger 14, an dem auf Planetenradachsen 26 an Lagern 27 Planetenräder 18 angeordnet ist. Die Getriebekomponenten 11 der ersten Planetenstufe 20, also das Hohlrad 12, der Planetenträger 14 mit den Planetenrädern 18 und dem Sonnenrad 16, sind derart dimensioniert, dass die erste Planetenstufe 20 eine betragsmäßige Standübersetzung 44 von 1,8 bis -7,5 aufweist. Der Planetenträger 14 in der ersten Planetenstufe 20 ist drehbar um eine Hauptdrehachse 15 des Koppelgetriebes 10 ausgebildet und ist drehmomentübertragend mit einer ersten Leistungswelle 21 verbunden. Über die erste Leistungswelle 10 wird eine Antriebsleistung 25 zugeführt, die eine erste Drehzahl 31 und ein erstes Drehmoment 32 aufweist. Das Einleiten der Antriebsleistung 25 in das Koppelgetriebe 10 erfolgt über den Planetenträger 14 der ersten Planetenstufe 20, deren Hohlrad 12 mit einem Gehäuse 17 verbunden ist. Das Hohlrad 12 der ersten Planetenstufe 20 dient damit als stationäre Getriebekomponente 11. Der Planetenträger 14 der ersten Planetenstufe 20 wiederum ist drehstarr, also drehmomentübertragend, über eine dritte Verbindungskomponente 43 mit dem Hohlrad 12 der zweiten Planetenstufe 30 gekoppelt. Infolgedessen wird eine erste Teilleistung 36 aus der ersten Planetenstufe 20 über deren Sonnenrad 16 abgeführt. Eine zweite Teilleistung 38, die zusammen mit der ersten Teilleistung 36 unter Berücksichtigung mechanischer Verluste der Antriebsleistung 25 entspricht, wird folglich in das Hohlrad 12 der zweiten Planetenstufe 30 geführt. Das Hohlrad 12 der zweiten Planetenstufe 30 ist um die Hauptdrehachse 25 drehbar ausgebildet, während der Planetenträger 14 der zweiten Planetenstufe 30 fest mit dem Gehäuse 17 verbunden ist. Die Getriebekomponenten 11 der zweiten Planetenstufe 30 sind derart dimensioniert, dass die zweite Planetenstufe 30 eine betragsmäßige Standübersetzung 44 von 1,8 bis 7,5 aufweist. In der zweiten Planetenstufe 30 dient der Planetenträger 14 als stationäre Getriebekomponente 11. Der Planetenträger 14 der zweiten Planetenstufe 30 ist auch mit Planetenradachsen 26 mit Lagern 27 versehen, auf denen die zugehörigen Planetenräder 18 drehbar aufgenommen sind. Über die drehbaren Planetenräder 18 wird die zweite Teilleistung 38 aus der zweiten Planetenstufe 38 mittels dessen Sonnenrads 16 abgeführt. Die erste und zweite Teilleistung 36, 38 entsprechen jeweils im Wesentlichen 50% der zugeführten Antriebsleistung 25.

Benachbart zur zweiten Planetenstufe 30 ist eine dritte Planetenstufe 40 angeordnet, die auch eine Mehrzahl an Getriebekomponenten 11 aufweist. Ein Hohlrad 12 der dritten Planetenstufe 40 ist über eine erste Verbindungskomponente 39 drehmomentübertragend mit dem Sonnenrad 16 der ersten Planetenstufe 20 verbunden. Dadurch wird die erste Teilleistung 36 aus der ersten Planetenstufe 20 in der dritten Planetenstufe 40 zugeführt. Die erste Verbindungskomponente 39 ist dabei im Wesentlichen als Kombination von Flanschen 35 und zumindest einem Steg 37 ausgebildet. Der Steg 37 der entsprechenden Verbindungskomponente 39 ist im Bereich der zweiten Planetenstufe 30 radial innen angeordnet. Eine zweite Verbindungskomponente 41 koppelt das Sonnenrad 16 der zweiten Planetenstufe 30 mit dem Planetenträger 14 der dritten Planetenstufe 40. Auch die zweite Verbindungskomponente 41 umfasst Flansche 35 und zumindest einen Steg 37. Der Steg 37 der zweiten Verbindungskomponente 41 ist radial weiter außen als der Steg 37 der ersten Verbindungskomponente 39. Ferner wird die dritte Planetenstufe 40 von der zweiten Verbindungskomponente 41 im Wesentlichen radial umgriffen. Ein Flansch 35 der zweiten Verbindungskomponente 41 ist dabei auf einer der zweiten Planetenstufe 30 abgewandten Seite der dritten Planetenstufe 40 mit deren Planetenträger 14 gekoppelt. Zwischen der zweiten und dritten Planetenstufe 30, 40 sind die erste und zweite Verbindungskomponente 39, 41 damit teilweise parallel ausgebildet. Durch die Kopplung des Hohlrads 12 und des Planetenträgers 14 der dritten Planetenstufe 40 mit der ersten und zweiten Planetenstufe 20, 30 werden am Sonnenrad 16 der dritten Planetenstufe 40 die erste und zweite Teilleistung 36, 38 kombiniert als Abtriebsleistung 29 an eine zweite Leistungswelle 23 abgegeben. Dabei ist die an der zweiten Leistungswelle 23 vorliegende zweite Drehzahl 33 höher als die erste Drehzahl 31 an der ersten Leistungswelle 21. Korrespondierend dazu ist das zweite Drehmoment 34 an der zweiten Leistungswelle 23 geringer als das erste Drehmoment 32 an der ersten Leistungswelle 31. Das Gesamtübersetzungsverhältnis 45, das sich auch dem Verhältnis der ersten und zweiten Drehzahl 31, 33 ergibt, beträgt im Wesentlichen 30 bis 130. Im Sinne der vorliegenden Anmeldung wird auch das Gesamtübersetzungsverhältnis nur betragsmäßig beschrieben. Dabei bietet das Koppelgetriebe 10 eine kompakte Größe. Der Außendurchmesser 42, der in FIG 1 der Durchmesser des größten Hohlrads 12, nämlich der zweiten Planetenstufe 30 ist, ist gegenüber den aus dem Stand der Technik bekannten Lösungen reduziert. Das Koppelgetriebe 10 ist dazu geeignet, Antriebsleistungen 25 aufzunehmen, bei denen sich im Zusammenspiel mit dem Außendurchmesser 42 eine durchmesserspezifische Leistungsdichte 50 von mindestens 2,9 kW/mm ergibt. Die durchmesserspezifische Leistungsdichte 50 beträgt vorzugsweise mindestens 3,5 kW/mm weiter bevorzugt 3,5 kW/mm, besonders bevorzugt 4,5 kW/mm.

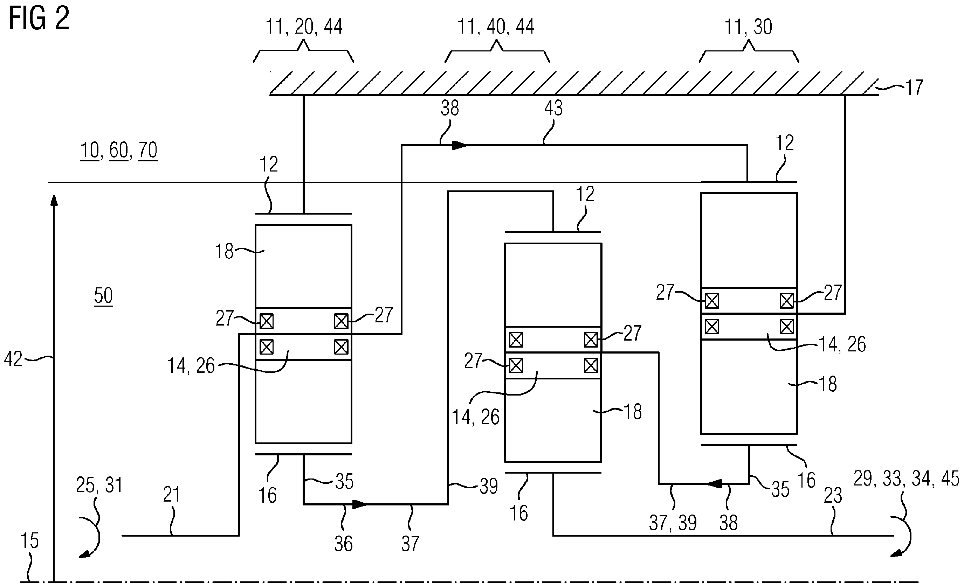

In FIG 2 ist schematisch der Aufbau einer zweiten Ausführungsform des beanspruchten Koppelgetriebes 10 abgebildet. Die FIG 2 korrespondiert insoweit mit FIG 1, dass gleiche Bezugszeichen die gleiche technische Bedeutung haben. Dementsprechend sind FIG 1 und FIG 2 in gegenseitiger Ergänzung zu lesen.

FIG 2 zeigt schematisch den Aufbau einer zweiten Ausführungsform des beanspruchten Koppelgetriebes 10. Das Koppelgetriebe 10 gemäß FIG 1 ist zur Verwendung in einem nicht näher dargestellten Antriebsstrang 60 einer auch nicht näher dargestellten Windkraftanlage 70 eingerichtet. Das Koppelgetriebe 10 umfasst eine erste, eine zweite und eine dritte Planetenstufe 20, 30, 40, die jeweils eine Mehrzahl an Getriebekomponenten 11 aufweisen und zusammenwirken. Die erste Planetenstufe 20 umfasst ein Hohlrad 12, ein Sonnenrad 16 und einen Planetenträger 14, an dem auf Planetenradachsen 26 an Lagern 27 Planetenräder 18 angeordnet ist. Die Getriebekomponenten 11 der ersten Planetenstufe 20, also das Hohlrad 12, der Planetenträger 14 mit den Planetenrädern 18 und dem Sonnenrad 16, sind derart dimensioniert, dass die erste Planetenstufe 20 eine betragsmäßige Standübersetzung 44 von 1,8 bis 7,5 aufweist. Der Planetenträger 14 in der ersten Planetenstufe 20 ist drehbar um eine Hauptdrehachse 15 des Koppelgetriebes 10 ausgebildet und ist drehmomentübertragend mit einer ersten Leistungswelle 21 verbunden. Über die erste Leistungswelle 10 wird eine Antriebsleistung 25 zugeführt, die eine erste Drehzahl 31 und ein erstes Drehmoment 32 aufweist. Das Einleiten der Antriebsleistung 25 in das Koppelgetriebe 10 erfolgt über den Planetenträger 14 der ersten Planetenstufe 20, deren Hohlrad 12 mit einem Gehäuse 17 verbunden ist. Das Hohlrad 12 der ersten Planetenstufe 20 dient damit als stationäre Getriebekomponente 11. Der Planetenträger 14 der ersten Planetenstufe 20 wiederum ist drehstarr, also drehmomentübertragend, über eine dritte Verbindungskomponente 43 mit dem Hohlrad 12 der zweiten Planetenstufe 30 gekoppelt. Infolgedessen wird eine erste Teilleistung 36 aus der ersten Planetenstufe 20 über deren Sonnenrad 16 abgeführt. Eine zweite Teilleistung 38, die zusammen mit der ersten Teilleistung 36 unter Berücksichtigung mechanischer Verluste der Antriebsleistung 25 entspricht, wird folglich in das Hohlrad 12 der zweiten Planetenstufe 30 geführt. Das Hohlrad 12 der zweiten Planetenstufe 30 ist um die Hauptdrehachse 25 drehbar ausgebildet, während der Planetenträger 14 der zweiten Planetenstufe 30 fest mit dem Gehäuse 17 verbunden ist. Die Getriebekomponenten 11 der zweiten Planetenstufe 30 sind derart dimensioniert, dass die zweite Planetenstufe 30 eine betragsmäßige Standübersetzung 44 von 1,8 bis 7,5 aufweist. In der zweiten Planetenstufe 30 dient der Planetenträger 14 als stationäre Getriebekomponente 11. Der Planetenträger 14 der zweiten Planetenstufe 30 ist auch mit Planetenradachsen 26 mit Lagern 27 versehen, auf denen die zugehörigen Planetenräder 18 drehbar aufgenommen sind. Über die drehbaren Planetenräder 18 wird die zweite Teilleistung 38 aus der zweiten Planetenstufe 38 mittels dessen Sonnenrads 16 abgeführt. Die erste und zweite Teilleistung 36, 38 entsprechen jeweils im Wesentlichen 50% der zugeführten Antriebsleistung 25.

Ferner ist die dritte Planetenstufe 40 entlang der Hauptdrehachse 15 des Koppelgetriebes 10 betrachtet, zwischen der ersten und zweiten Planetenstufe 20, 30 angeordnet. Die dritte Planetenstufe 40 weist ebenfalls eine Mehrzahl an Getriebekomponenten 11 auf. Ein Hohlrad 12 der dritten Planetenstufe 40 ist über eine erste Verbindungskomponente 39 drehmomentübertragend mit dem Sonnenrad 16 der ersten Planetenstufe 20 verbunden. Dadurch wird die erste Teilleistung 36 aus der ersten Planetenstufe 20 in der dritten Planetenstufe 40 zugeführt. Die erste Verbindungskomponente 39 ist dabei im Wesentlichen als Kombination von Flanschen 35 und zumindest einem Steg 37 ausgebildet. Dadurch, dass die dritte Planetenstufe 40 benachbart zur ersten Planetenstufe 20 angeordnet ist, ist die erste Verbindungskomponente 39, entlang der Hauptdrehachse 15 betrachtet, erheblich verkürzt ausgebildet. Dadurch wird eine Gewichtsersparnis erzielt, die wiederum in einer Reduzierung der rotierenden Massen im Koppelgetriebe 10 resultiert. Verringerte rotierende Massen bedeuten wiederum eine verringerte Geräuschentwicklung im Betrieb des Koppelgetriebes 10. Ferner ist die erste Verbindungskomponente 39 in einfacher Weise herstellbar und montierbar.

Eine zweite Verbindungskomponente 41 koppelt das Sonnenrad 16 der zweiten Planetenstufe 30 mit dem Planetenträger 14 der dritten Planetenstufe 40. Auch die zweite Verbindungskomponente 41 umfasst Flansche 35 und zumindest einen Steg 37. Der Steg 37 der zweiten Verbindungskomponente 41 ist entlang der Hauptdrehachse 15 betrachtet, erheblich verkürzt. Infolgedessen ist die zweite Verbindungskomponente 41 einfach herstell- und montierbar und bietet eine erhebliche Gewichtsersparnis. Ein Vorteil der Ausführungsform gemäß FIG 2 besteht darin, dass die erste und zweite Verbindungskomponente 39, 41 nicht mehr abschnittsweise parallel verlaufen und sich im Bereich der dritten Planetenstufe 40 nicht radial umgreifen. Hierdurch wird die Herstellung des Koppelgetriebes 10 weiter vereinfacht. Ein Flansch 35 der zweiten Verbindungskomponente 41 ist dabei auf einer der ersten Planetenstufe 20 abgewandten Seite der dritten Planetenstufe 40 mit deren Planetenträger 14 gekoppelt. Zwischen der zweiten und dritten Planetenstufe 30, 40 sind die erste und zweite Verbindungskomponente 39, 41 damit teilweise parallel ausgebildet. Durch die Kopplung des Hohlrads 12 und des Planetenträgers 14 der dritten Planetenstufe 40 mit der ersten und zweiten Planetenstufe 20, 30 werden am Sonnenrad 16 der dritten Planetenstufe 40 die erste und zweite Teilleistung 36, 38 kombiniert als Abtriebsleistung 29 an eine zweite Leistungswelle 23 abgegeben. Dabei ist die an der zweiten Leistungswelle 23 vorliegende zweite Drehzahl 33 höher als die erste Drehzahl 31 an der ersten Leistungswelle 21. Korrespondierend dazu ist das zweite Drehmoment 34 an der zweiten Leistungswelle 23 geringer als das erste Drehmoment 32 an der ersten Leistungswelle 31. Das Gesamtübersetzungsverhältnis 45, das sich auch dem Verhältnis der ersten und zweiten Drehzahl 31, 33 ergibt, beträgt im Wesentlichen 30 bis 130. Dabei bietet das Koppelgetriebe 10 eine kompakte Größe. Der Außendurchmesser 42, der in FIG 1 der Durchmesser des größten Hohlrads 12, nämlich der zweiten Planetenstufe 30 ist, ist gegenüber den aus dem Stand der Technik bekannten Lösungen reduziert. Das Koppelgetriebe 10 ist dazu geeignet, Antriebsleistungen 25 aufzunehmen, bei denen sich im Zusammenspiel mit dem Außendurchmesser 42 eine durchmesserspezifische Leistungsdichte 50 von mindestens 2,9 kW/mm ergibt. Die durchmesserspezifische Leistungsdichte 50 beträgt vorzugsweise mindestens 3,5 kW/mm weiter bevorzugt 3,5 kW/mm, besonders bevorzugt 4,5 kW/mm.

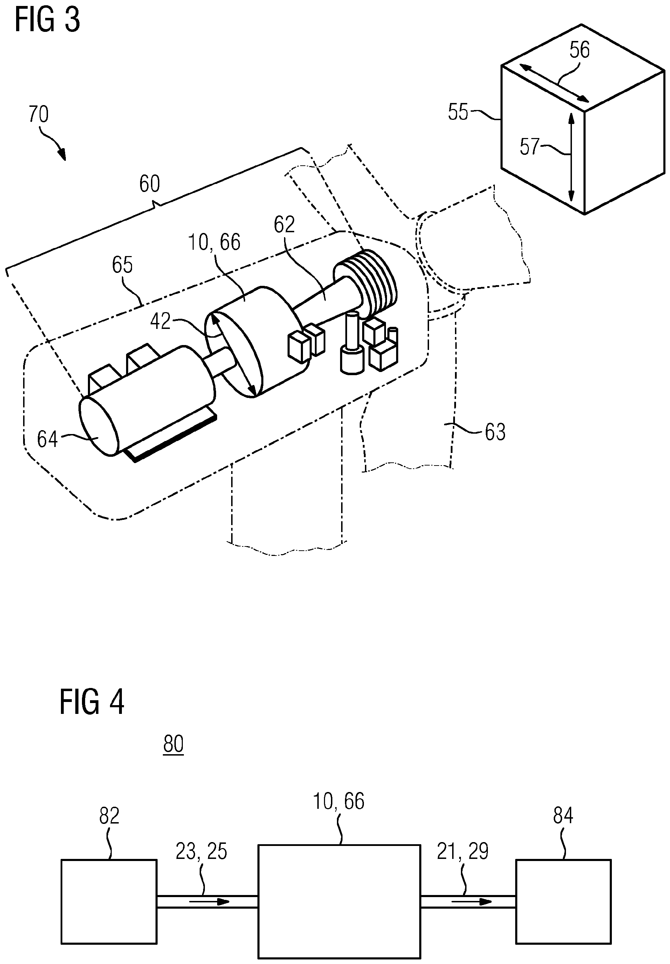

In FIG 3 ist in einer geschnittenen Schrägansicht eine Ausführungsform einer erfindungsgemäßen Windkraftanlage 70 dargestellt. Die Windkraftanlage 70 umfasst einen Rotor 63, der durch Wind in Drehung versetzbar ist. Der Rotor 63 ist über eine Rotorwelle 62 mit einem Getriebe 66 drehmomentübertragend verbunden. Das Getriebe 66 wiederum ist drehmomentübertragend mit einem Generator 64 verbunden. Die Rotorwelle 62, das Getriebe 66 und der Generator 64 gehören zu einem Antriebssatz 60 der in einer Gondel 65 der Windkraftanlage 70 aufgenommen ist. Das Getriebe 66 ist gemäß einer der oben beschriebenen Ausführungsformen ausgebildet. Durch ein entsprechend ausgebildetes Getriebe 66 wird die Effizienz der Windkraftanlage 70 gesteigert. Insbesondere bietet ein beanspruchtes Koppelgetriebe 10 einen reduzierten Durchmesser 42, was die Montage der Windkraftanlage 70 erleichtert. Das Getriebe 66, das als Koppelgetriebe 10 ausgebildet ist, ist derart dimensioniert, dass es in einem ISO-Standard-Container 55 transportierbar ist. Ein solcher ISO-Standard-Container 55 weist in seinem Innenraum eine lichte Breite 56 und eine lichte Höhe 57 auf. Der Außendurchmesser 42 des Getriebes 66 ist dabei geringer als die lichte Breite 56 und die lichte Höhe 57 des ISO-Standard-Containers 55 und ist in einem solchen transportierbar.

Eine Ausführungsform einer beanspruchten Industrie-Applikation 80 ist in FIG 4 dargestellt. Die Industrie-Applikation 80 umfasst ein Antriebsmittel 82, das beispielsweise als Elektromotor, als Verbrennungsmotor oder als Hydraulikmotor ausgebildet ist. Das Antriebsmittel 82 ist drehmomentübertragen mit einem Getriebe 66 gekoppelt, das wiederum mit einer mechanischen Anwendung 84 verbunden ist. Das Antriebsmittel 82 ist zum Abgeben einer Antriebsleistung 25 ausgebildet, die über eine zweite Leistungswelle 23 dem Getriebe 66 zugeführt wird. Durch das Getriebe 66 wird die eingehende Antriebsleistung 25, unter Berücksichtigung von Reibungsverlusten, in puncto Drehzahl und Drehmoment gewandelt, als Ausgangsleistung 29 über eine erste Leistungswelle 21 an die mechanische Anwendung 84 weitergeleitet. Dabei ist die Drehzahl an der ersten Leistungswelle 21 niedriger als an der zweiten Leistungswelle 23. Erfindungsgemäß ist das Getriebe 66 als Koppelgetriebe 10 nach einer der oben beschriebenen Ausführungsformen ausgebildet. Die mechanische Anwendung 84 kann als eine Mühle, eine Vertikalmühle, eine Zuckermühle, eine Zementmühle, ein Gesteinsbrecher, ein Förderband, eine Pumpe, eine Hubvorrichtung, eine Müll- oder Schrottpresse ausgebildet sein.

## Patentansprüche

1. Koppelgetriebe (10), umfassend eine erste, zweite und dritte Planetenstufe (20, 30, 40), die jeweils als Getriebekomponenten (11) ein Hohlrad (12), einen Planetenträger (14) und ein Sonnenrad (16) umfassen, wobei die erste und zweite Planetenstufe (20, 30) jeweils eine stationäre Getriebekomponente (11) aufweisen, **dadurch gekennzeichnet, dass** das Koppelgetriebe (10) eine durchmesserspezifische Leistungsdichte (50) von mindestens 2,9 kW/mm aufweist.

2. Koppelgetriebe (10) nach Anspruch 1, **dadurch gekennzeichnet, dass** das Sonnenrad (16) der ersten Planetenstufe (20) drehstarr mit dem Hohlrad (12) der dritten Planetenstufe (40) verbunden ist.

3. Koppelgetriebe (10) nach Anspruch 1 oder 2, **dadurch gekennzeichnet, dass** das Sonnenrad (16) der zweiten Planetenstufe (30) drehstarr mit dem Planetenträger (14) der dritten Planetenstufe (40) verbunden ist.

4. Koppelgetriebe (10) nach einem der Ansprüche 1 bis 3, **dadurch gekennzeichnet, dass** das Koppelgetriebe (10) eine durchmesserspezifische Leistungsdichte (50) von mindestens 3,5 kW/mm, bevorzugt von mindestens 4,0 kW/mm, besonders bevorzugt vom mindestens 4,5 kW/mm aufweist.

5. Koppelgetriebe (10) nach einem der Ansprüche 1 bis 4, **dadurch gekennzeichnet, dass** das Hohlrad (12) der ersten Planetenstufe (20) und/oder der Planetenträger (14) der zweiten Planetenstufe (30) als stationäre Getriebekomponente (11) ausgebildet ist.

6. Koppelgetriebe (10) nach einem der Ansprüche 1 bis 5, **dadurch gekennzeichnet, dass** die dritte Planetenstufe (40) entlang einer Hauptdrehachse (15) des Koppelgetriebes (10) zwischen der ersten und zweiten Planetenstufe (20, 30) angeordnet ist.

7. Koppelgetriebe (10) nach einem der Ansprüche 1 bis 6, **dadurch gekennzeichnet, dass** die erste, zweite oder dritte Getriebestufe (20, 30, 40) als Plusgetriebe ausgebildet ist.

8. Koppelgetriebe (10) nach einem der Ansprüche 1 bis 7, **dadurch gekennzeichnet, dass** der Planetenträger (14) der ersten Planetenstufe (20) und/oder das Hohlrad (12) der zweiten Planetenstufe (30) zum Einleiten jeweils einer Teilleistung (36, 38) einer Antriebsleistung (25) ausgebildet ist.

9. Koppelgetriebe (10) nach Anspruch 8, **dadurch gekennzeichnet, dass** eine zweite Teilleistung (38), die dem Hohlrad (12) der zweiten Planetenstufe (30) zugeführt wird, im Wesentlichen zwischen 30% und 50% der Antriebsleistung (25) beträgt.

10. Koppelgetriebe (10) nach einem der Ansprüche 1 bis 9, **dadurch gekennzeichnet, dass** die erste Planetenstufe (20) eine betragsmäßige Standübersetzung (44) von 1,2 bis 11, vorzugsweise von 1,8 bis 7,5 aufweist und/oder die zweite Planetenstufe (30) eine betragsmäßige Standübersetzung (44) von 1,2 bis 11, vorzugsweise von 1,8 bis 7,5 aufweist.

11. Koppelgetriebe (10) nach einem der Ansprüche 1 bis 10, **dadurch gekennzeichnet, dass** die Standübersetzungen (44) der ersten und zweiten Planetenstufe (20, 30) derart ausgebildet sind, dass die erste und zweite Teilleistung (36, 38) im Wesentlichen gleich groß sind.

12. Koppelgetriebe (10) nach einem der Ansprüche 1 bis 11, **dadurch gekennzeichnet, dass** ein Außendurchmesser (42) des Koppelgetriebes (10) geringer ist als eine Breite und/oder Höhe eines ISO-Standard-Containers.

13. Antriebsstrang (60) für eine Windkraftanlage (70), umfassend eine Rotorwelle (62), die drehmomentübertragend mit einem Getriebe (66) gekoppelt ist, und einen Generator (64), der drehmomentübertragend mit dem Getriebe (66) gekoppelt ist, **dadurch gekennzeichnet, dass** das Getriebe (66) als Koppelgetriebe (10) nach einem der Ansprüchel 1 bis 12 ausgebildet ist.

14. Windkraftanlage (70), umfassend eine Gondel (65) an der ein Rotor (62) drehbar angebracht ist, und einen Antriebsstrang (60), der in der Gondel (65) aufgenommen ist und drehmomentübertragend mit dem Rotor (62) verbunden ist, **dadurch gekennzeichnet, dass** der Antriebsstrang (60) nach Anspruch 13 ausgebildet ist.

15. Industrie-Applikation (80), umfassend ein Antriebsmittel (82), das drehmomentübertragend mit einem Getriebe (66) verbunden ist, und eine mechanische Anwendung (84), die mit dem Getriebe (66) drehmomentübertragend verbunden ist, **dadurch gekennzeichnet, dass** das Getriebe (66) als Koppelgetriebe (10) nach einem der Ansprüche 1 bis 12 ausgebildet ist.
